# EUROPÄISCHE PATENTANMELDUNG

(11) **EP 3 919 349 A1**
(43) Veröffentlichungstag der Anmeldung: **08.12.2021**
(21) Anmeldenummer: 21177736.2
(22) Anmeldetag: 04.06.2021
(51) Int. Cl.: B62B 5/06, E05B 1/00

(54) **SCHUTZGRIFF**

(30) Priorität: 05.06.2020 DE 102020115052; 05.06.2020 DE 202020103259 U
(71) Anmelder: Gautzsch, Alexandra, 16837 Luhme (DE)
(72) Erfinder: Gautzsch, Alexandra, 16837 Luhme (DE)
(74) Vertreter: Kirschner, Sebastian

(57) **Zusammenfassung**

Die Erfindung betrifft einen Schutzgriff (1) mit zwei schwenkbeglich verbundenen Griffschalen (2). Die Gefahr für den Benutzer, sich mit Viren, Bakterien, Pilzen und Keimen zu beschmutzen, ist dadurch stark verringert, dass die Griffschalen (2, 3) je einen Griffrahmen (2b, 3b) und je ein austauschbares Griffbereichspassstück (2a, 3a) aufweisen, wobei die Griffrahmen (2b, 3b) in ihrem Außenbereich Verbindungsklicksysteme aufweisen, wobei die Griffrahmen (2b , 3b) mit dazugehörigen Griffbereichspassstücken (2a, 3a), welche Verbindungsklicksysteme in ihrem Innenbereich aufweisen, verbindbar sind, wobei der erste Griffrahmen (2b) den ersten und den zweiten Endbegrenzungskragen (6, 7) aufweist, wobei der erste Endbegrenzungskragen (6) eine Platte (9) mit integriertem, herausnehmbarem Einkaufswagenchip (18) und ein Loch (19) zum Anbringen eines Karabinerhakens oder eines Schlüsselbandes zum Transport des Schutzgriffes (1) aufweist, wobei der zweite (7) Endbegrenzungskragen in Form einer Platte (20) ausgebildet ist und einen Pin (21) aufweist, mit welchem man Tastaturen und Touchscreens betätigen kann, wobei zusätzlich in der Platte (20) ein Flaschenöffner (22) ausgebildet ist.

## Beschreibung

Die Erfindung betrifft einen Schutzgriff mit den Merkmalen des Oberbegriffs des Patentanspruches 1.

Anzufassende Einkaufswagenschiebestangen, Kinderwagenschiebestangen, Türklinken, Türgriffstangen, Altkleidercontainergriffe, Mülltonnenschiebestangen, Haltegriffe / Haltestangen von Bus und Bahn, Geländerlaufstangen, WC-Deckel besonders in öffentlichen Toiletten, Mülltonnendeckel, Briefkastendeckel, Tastaturen z. B. von EC-Geräten oder Touchscreens z. B. von Bankautomaten, Henkel von Einkaufskörben oder von Handtaschen und Rucksäcken, Kleiderständerschiebestangen besonders in Herstellungsfabriken und auf Messen, aber auch Leinen und Seile können Viren, Bakterien, Pilze und Keime aufweisen. Es ist bekannt, dass Einkaufswagenschiebestangen mit Keimen belastet sind. Selbst wenn diese mit einem Reinigungskonzentrat gereinigt werden, ist schon nach der Benutzung durch wenige Kunden die Einkaufswagenschiebestange schon wieder verschmutzt bzw. bakteriell verkeimt. Einkaufswagen können also eine schnelle und großflächige Verbreitungsquelle von Keimen, Viren, Bakterien und Pilzen sein. Es ist bekannt, die Schiebestangen mit einem Kunststoffrohr aus einem selbstreinigenden Kunststoff herzustellen. Das Kunststoffrohr soll bewirken, dass evtl. vorhandene Keime oder Bakterien abgetötet werden. Die Entwicklung und Herstellung von solchen Einkaufswagen mit selbstreinigenden Kunststoffrohr ist aufwendig und teuer. Die Kunden von Supermärkten laufen Gefahr, sich an den bekannten Einkaufswagen entsprechend zu infizieren.

Ferner besteht eine Gefahr des Kontaktes mit Viren, Keimen oder Bakterien, wenn Türklinken, Türgriffstangen, Altkleidercontainergriffe, Mülltonnenschiebestangen,
Kleiderständerschiebestangen, Kinderwagenschiebestangen, Geländerläufe, Haltegriffe / Haltestangen von Bus und Bahn, WC-Deckeln, besonders in öffentlichen Toiletten, Mülltonnendeckel, Briefkastendeckel, Tastaturen, Seile, Leinen, Henkel, gegriffen werden müssen, um einen der vorgenannten Gegenstände zu nutzen/ bedienen.

Beschreibung des Schutzgriff zum kontaktlosen Greifen oder Umgreifen und Bedienen/ Benutzen von Einkaufswagenschiebestangen, Kinderwagenschiebestangen, Türklinken, Türgriffstangen, Altkleidercontainergriffe, Mülltonnenschiebestangen, Geländerlaufstangen, Haltegriffe / Haltestangen von Bus und Bahn, Geländerlaufstangen, WC-Deckel, Mülltonnendeckel, Briefkastendeckeln, Tastaturen von EC-Geräten oder Touchscreens an Automaten, welche keine eigenen Endbegrenzungen aufweisen. Desweiteren können Henkel, Kleiderständerschiebestangen, Seile / Leinen und Henkel Viren, Bakterien, Pilze und Keime aufweisen. Der Schutzgriff dient dem Schutz der Hände vor diesen Viren, Bakterien, Pilzen und Keimen, und minimiert somit das Risiko sich mit gefährlichen Krankheiten zu infizieren enorm, wobei der Schutzgriff durch seine austauschbaren Passstücke auch zusätzliche Funktionen übernehmen kann. Der Benutzer greift / umgreift und bedient / benutzt die oben genannten Gegenstände, wenn er den Schutzgriff einsetzt, kontaktlos, vorausgesetzt die o.g. Gegenstände weisen einen kleineren Außendurchmesser als der Schutzgriff in seinem Innenbereich auf und desweiteren müssen die zu umgreifenden Gegenstände einen längsseitig gemessenen größeren Außenbereich aufweisen als der längsseitig gemessene Außenbereich des Schutzgriffes aufweist. Da der erfindungsgemäße Schutzgriff einen in seinem zylindrischen Aufnahme- und Innenbereich gemessenen Innendurchmesser von 5 cm aufweist und der Schutzgriff eine Gesamtlänge von 10 cm aufweist, ergibt sich bei o. g. Gegenständen ein sehr hoher Einsatzbereich.

Kinderwagenschiebestangen werden oft angefasst, nachdem vorher Griffe und Stangen im öffentlichen Raum gegriffen wurden, weil man die Kinder mitnimmt, somit können Viren etc., welche sich bekanntlich für einige Stunden bis Tage auf verschiedenen Oberflächen halten, auf die Kinderwagenschiebestange übertragen werden, was zur Folge hat, dass Mutter und Kind sich mit diesen Erregern infizieren können, wenn sie die Kinderwagenschiebestange dann anfassen und was z. B. Kinder sehr häufig machen im Anschluss im Kinderwagen etwas mit ungewaschenen Händen essen.

Türklinken und Türgriffstangen und Geländerläufe weisen bekanntlich besonders in öffentlichen Gebäuden hochgradige Belastungen durch Krankheitserreger auf, weil sie oft von Menschen mit ungewaschenen Händen angefasst und bedient /benutzt werden, wobei die Krankheitserreger auf den Menschen übertragen werden.

Altkleidercontainer in denen auch die Kleider von z. B. Menschen, welche ansteckende Krankheiten erlitten, entsorgt werden, wobei bekannt ist, dass diese meist nicht gewaschen sind und fäkale und verkeimte Bereiche aufweisen. Altkleidercontainer haben eine Griffstange, welche man umgreifen muss, um den Container zu öffnen, wobei die Bekleidung bestenfalls lose eingeworfen werden. Der Entsorgende greift also den Griff des Altkleidercontainers, öffnet diesen, greift dann mit den Händen diese verkeimten Bekleidungsstücke und greift wieder den Griff an und entsorgt die restlichen Kleider. Altkleidercontainergriffe werden von vielen Menschen benutzt und werden nicht desinfiziert. Dies hat zur Folge, dass auch diese Altkleidercontainergriffe keimbelastet sind.

Haltegriffe / Haltestangen gerade in öffentlichen Verkehrsmitteln, wie Bus und Bahn weisen genau wie Einkaufswagenschiebestangen hochgradige Keimbelastungen auf. Wie allgemein bekannt ist, werden auch diese täglich von vielen Menschen angefasst. Krankheitserreger werden so unheimlich viel, schnell und oft übertragen, was der Schutzgriff in der Benutzung verhindert.

Desweiteren sind Quellen, um sich mit solchen Krankheitserregern zu infizieren, die Mülltonnenschiebestangen. Es ist bekannt, dass die Mitarbeiter der Müllabfuhr die Tonnen kontrollieren, um Fehlbefüllungen festzustellen. Dabei greifen die Mitarbeiter der Müllabfuhr, welche zwar selbst Handschuhe tragen, in die Mülltonnen und durchsuchen diese, mit denselben Handschuhen greifen sie dann allerdings auch wieder die Mülltonnenschiebestangen an und übertragen somit ein hohes Maß an Viren, Pilzen und Keimen etc. oder aber auch anderen Krankheitserregern auf die Schiebestangen. Der Verbraucher realisiert dies oft nicht und vergisst nach dem täglichen Gang zur Mülltonne oft das Hände waschen, wodurch schnell Krankheiten übertragen werden.

Selbst Briefkastendeckel, welche anhebbar sind können z. B. Mit Coronaviren etc. belastet sein, da diese von den Briefträgern mehrmals in der Woche angefasst werden, wobei bekannt ist, dass sich manche stark gesundheitsgefährdenden Viren und dgl. auf Briefkastendeckeln halten und ansammeln. Fasst der Briefträger/-in nun im Laufe seines Arbeitstages diese Briefkastendeckel mit bloßen Fingern an, bringt er sich als auch die Empfänger der Post in die Gefahr, sich mit stark gesundheitsgefährdenden Erregern zu infizieren.

Desweiteren bieten auch Tastaturen, wie Tastaturen von EC-Geräten, Tastaturen oder Touchscreens von z.B. Bankautomaten oder Lebensmittelautomaten z. B. In Krankenhäusern eine ideale Grundlage, um eine Brutstätte für Viren, Bakterien etc. zu sein, weil sie oft und von vielen Menschen mit ungewaschenen, verkeimten Händen gegriffen und bedient werden.

WC-Deckel, besonders in öffentlichen Toiletten, Mülltonnendeckel, Mülleimerdeckel, all diese Gegenstände weisen hohe Keimbelastungen auf was zu Übertragungen von Krankheitserregern führt.

Oft und schnell können so auch krankmachende Pilze, wie z.B. Candida Albicans, oder Aspergillus Nigger (schwarzer Schimmelpilz) übertragen werden, was zu starken gesundheitlichen Problemen und schweren Folgeerkrankungen führen kann.

Die Liste der Gegenstände, welche sich im öffentlichen als auch teilweise im privaten Raum wieder finden ,welche von Menschen gegriffen, umgriffen und bedient werden, die mit Viren, Bakterien, Pilzen, Keimen oder aber auch mit Pollen und Pestiziden, welche in besonders trockenen, heißen Sommern oft kilometerweit, durch Wind auf zu greifende/umgreifende Gegenstände übertragen werden etc. belastet sind, ist lang.

Aus der US 3 072 955 A ist ein Schutzgriff bekannt, der einen röhrenförmigen, flexiblen, längsgeschlitzten Grundkörper aufweist. Der Schutzgriff ist entlang des Längsschlitzes aufbiegbar, um einen Gegenstand wie eine Pfanne oder einen Schraubenzieher zu umfassen. An der Innenwandung des Grundkörpers sind in Längsrichtung verlaufende Rippen ausgebildet, die den zu umgreifenden Gegenstand fixieren. An den Stirnseiten des Grundkörpers ist ein radial aufragender Kragen ausgebildet, der zur Stabilisierung dient, aber zu niedrig ist, um ein Abrutschen der Hand über das Ende des Schutzgriffes sicher zu vermeiden.

Aus der US 2 239 180 A ist ein Schutzgriff aus einem flexiblen Material bekannt, der einen Längsschlitz aufweist und zum Umgreifen von Pfannengriffen dient. Eine Grifffläche des Schutzgriffes ist fassförmig gewölbt ausgebildet.

Aus der US 2008 / 0 289 148 A1 ein flexibler Schutzgriff mit einem Längsschlitz bekannt, wobei der Schlitz sich nicht in Radialrichtung, sondern nahezu tangential zur Innenwandung erstreckt, um ein Herausrutschen des zu umgreifenden Gegenstandes zu vermeiden.

Aus der US 5 722 117 A ist einen röhrenförmigen Schutzgriff bekannt, der zwei überlappende Längskantenbereiche aufweist, an denen der Schutzgriff aufgebogen werden kann, um einen Gegenstand zu umfassen.

Aus der US 4 890 355 A ein längsgeschlitzter Schutzgriff bekannt, der an seiner Unterseite Fingermulden aufweist.

Aus der DE 806 479 B ist ein aus einem Schlauchstück gefertigter Schutzgriff bekannt. Das Schlauchstück z. B. aus Gummi, ist derart aufgespalten, dass zwei sich auf gehörige Länge überlappende Spaltenden entstehen. Die Innenfläche des Schlauchstücks und die einander zugekehrten Flächen der Spaltenden können geriefelt oder sonst wie griffig gemacht sein, um den Halt der Hülle auf dem zu schützenden Handgriff einerseits und einen verbesserten Zusammenhalt der Spaltenden andererseits zu erzielen. Der Schlauch wird im aufgebogenen Zustand über den zu schützenden Handgriff gestreift.

Aus der DE 20 2020 101 705 U1 ist ein gattungsbildender Schutzgriff bekannt. Es handelt sich um einen Schutzgriff aus festem, Spülmaschinen geeignetem Kunststoff. Der Schutzgriff kann in der Spülmaschine gereinigt werden. Der Schutzgriff weist zwei Griffschalen auf. Die Griffschalen sind über einen Verbindungsbereich in Form einer flexiblen Kunststofflippe entlang ihrer rückwärtigen Längsseiten schwenkbeweglich miteinander verbunden. Die Griffschalen können zum Umgreifen von insbesondere zylindrischen Gegenständen genutzt werden. Dazu begrenzen die Griffschalen im geschlossenen Zustand eine Aufnahme und weisen endseitige Öffnungen auf. Die Griffschalen können soweit auseinandergeklappt werden, dass sie einen Gegenstand, wie beispielsweise die Griffstange eines Einkaufswagens umgreifen können. Der Schutzgriff bildet daher eine Art öffenbare und schließbare Manschette. Die obere Griffschale ist im Wesentlichen halbröhrenförmig ausgebildet. Die untere Griffschale ist in Form eines U- Profils ausgebildet. An den stirnseitigen Enden sind zwei höher abstehenden Endbegrenzungen, die sogenannten Endbegrenzungskragen ausgebildet. Somit ist ein versehentliches Abrutschen der Hände auf den eigentlichen Einkaufswagengriff/ Türklinke verhindert. Mittig an der oberen Griffschale als auch an der unteren Griffschale des so entstandenen Schutzgriffes befindet sich außen, an den freien offenbaren Längskantenbereichen ein Verschluss. Der Verschluss weist hier einen schwenkbaren Riegel auf. Der Riegel ist schwenkbare mit der oberen Griffschale verbunden. Vorzugsweise weist die obere Griffschale im Bereich des Riegels eine ebene Fläche auf, insbesondere eine Mulde auf, wobei der Riegel von der ebenen Fläche beim Schwenken in einer Ebene geführt wird. Der Schutzgriff dient dem Anwender zum Schutz der Hände vor Bakterien, Viren etc., da man ihn einfach und leicht über Einkaufswagengriffe als auch Türklinken aufklicken kann.

Der Erfindung liegt daher die Aufgabe zugrunde, einen Schutzgriff so auszugestalten und weiterzubilden, dass er eben nicht nur für Einkaufswagen und Türklinken, sondern auch für Türgriffstangen, Kinderwagenschiebestangen, Haltegriffe, Haltestangen von Bus und Bahn, Altkleidercontainergriffen, Mülltonnenschiebestangen, WC-Deckeln, Mülleimer- und Mülltonnendeckeln, Briefkastendeckeln, Kleiderständerschiebestangen, Leinen, Seile, Henkeln, Tastaturen und Touchscreen zum kontaktlosen Greifen/ Umgreifen und Nutzen / Bedienen einsetzbar ist und die Gefahr für den Benutzer, sich mit Viren, Bakterien, Pilzen und Keimen etc. zu belasten und sich ggf. mit gefährlichen Krankheiten zu infizieren, stark verringert ist.

Der Schutzgriff dieser Erfindung ist wie oben erläutert für o. g. Gegenstände einsetzbar (Voraussetzung Länge und Durchmesser). Kontaktlos meint hier, dass der Benutzer mit seinen Händen nur in Kontakt mit dem Schutzgriff, aber nicht in Kontakt mit dem Gegenstand kommt. Desweiteren liegt der Erfindung die Aufgabe zu Grunde, den Schutzgriff für den jeweiligen Benutzer so gestaltbar zu machen, dass der Benutzer zusätzliche Funktionen mit dem Schutzgriff erhält, was die Attraktivität des Schutzgriffes steigert und den Nutzen für den Benutzer erhöht, wodurch der Schutzgriff schneller zum täglichen Begleiter etabliert werden kann, so dass er wie Schuhe ("ein zweites paar Füße") oder Bekleidung ("eine zweite Haut)" bald das "zweite paar Hände" darstellen kann. Schuhe dienen dem Schutz der Füße, Kleidung dienen dem Schutz des Körpers und der Schutzgriff dient vorrangig dem Schutz der Hände, welche einen Übertragungsweg bilden können (von der Hand in den Mund).

Diese Aufgabe wird nun durch einen Schutzgriff mit den Merkmalen des Patentanspruches 1 gelöst.

Der Schutzgriff weist ein oder mehrere Materialien auf. Der Schutzbegriff weist eine erste Griffschale, mit einer zweiten Griffschale, wobei die Griffschalen schwenkbeweglich an einem jeweils ersten Längskantenbereich miteinander verbunden sind, wobei die Griffschalen entlang ihrer zweiten Längskantenbereiche frei sind und eine Maulöffnung begrenzen, wobei an diesen zweiten freien Längskantenbereichen ein Verschluss oder mehrere Verschlüsse angeordnet oder ausgebildet sind, wobei in einem geöffneten Zustand des Schutzgriffes die Maulöffnung zum Umgreifen von einer Einkaufswagenschiebestange, einer Türklinke, einer Türgriffstange, einer Kinderwagenschiebestange, einem Haushaltsmülltonnengriff, einem Gewerbemülltonnengriff, Geländerlaufstangen, Altkleidercontainergriffen, einer Haltestange / einem Haltegriff, von Bus, S-Bahn und U-Bahn, Leinen, Seile, Henkel geeignet ist, wobei in einem geschlossenen Zustand die freien, zweiten Längskantenbereiche über den Verschluss miteinander verbunden sind, wobei der Schutzgriff zwei Endbegrenzungskragen, nämlich einen ersten Endbegrenzungskragen und einen zweiten Endbegrenzungskragen aufweist, wobei zwischen den beiden Endbegrenzungskragen ein Griffbereich ausgebildet ist und der Außendurchmesser des Schutzgriffes im Griffbereich kleiner als der Außendurchmesser des Schutzgriffes an den Endbegrenzungskragen ist.

Der Schutzgriff zeichnet sich erfindungsgemäß dadurch aus, dass die Griffschalen je einen Griffrahmen und je ein austauschbares Griffbereichspassstück aufweisen, wobei die Griffrahmen in ihrem Außenbereich Verbindungsklicksysteme aufweisen, wobei die Griffrahmen mit dazugehörigen Griffbereichspassstücken, welche Verbindungsklicksysteme in ihrem Innenbereich aufweisen, verbindbar oder verbunden sind, wobei der erste Griffrahmen den ersten und den zweiten Endbegrenzungskragen aufweist, wobei der erste Endbegrenzungskragen eine Platte mit intergeriertem, herausnehmbarem Einkaufswagenchip und ein Loch aufweist, wobei das Loch zum Anbringen eines Karabinerhakens oder eines Schlüsselbandes zum Transport des Schutzgriffes geeignet ist, wobei die Platte zusätzlich zum Greifen und Anheben und Öffnen von WC-Deckeln, Mülltonnendeckeln, Briefkastendeckeln ausgebildet ist, wobei der zweite Endbegrenzungskragen in Form einer Platte ausgebildet ist und einen Pin aufweist, mit welchem man Tastaturen und Touchscreens betätigen kann, wobei zusätzlich in der Platte ein Flaschenöffner ausgebildet ist, wobei das Griffbereichspassstück für den zweiten Griffrahmen einen ebenen Griffbereich ohne Endbegrenzungskragen aufweist, wobei der zweite Griffrahmen ebenfalls mit dem Griffbereichspassstück über ein Klicksystem verbunden oder verbindbar ist, wodurch die zweite Griffschale gebildet ist.

Die erste Griffschale weist einen Griffrahmen auf, welcher einen ersten Endbegrenzungskragen und einen zweiten Endbegrenzungskragen aufweist, wobei der erste Endbegrenzungskragen eine Platte mit intergeriertem, herausnehmbarem Einkaufswagenchip und einer Öffnung z.B. in Form eines runden Loches aufweist, wobei die Öffnung zum Anbringen eines Karabinerhakens oder eines Schlüsselbandes zum Transport des Schutzgriffes geeignet ist, wobei die Platte mit dem Einkaufswagenchip zusätzlich zum Greifen und Anheben und Öffnen von WC-Deckeln, Mülltonnendeckeln, Briefkastendeckeln dient, wobei wenn der Einkaufswagenchip im Einkaufswagen steckt, das Aufnahmegebilde des Chips dazu dienlich ist, dort seinen Einkaufsbeutel anzuhängen, wobei der zweite Endbegrenzungskragen auch in Form einer Platte ausgebildet ist und einen Pin aufweist, mit welchem man Tastaturen und Touchscreens betätigen kann, wobei diese Platte zusätzlich eine Öffnung in Form eines Flaschenöffners aufweist, was den Vorteil hat, das man gerade auf Reisen immer seinen eigenen Flaschenöffner mit sich führt, denn gerade viel benutzte Flaschenöffner an z.B. Raststätten können keimbelastet sein, wobei die Griffrahmen beider Griffschalen in ihrem Innenbereich ein Einschubsystem aufweisen können, wodurch der Innenbereich des Schutzgriffes mit den dazugehörigen Innenbereichspassstücken, welche mit dem Einschubsystem kompatible Verbindungsbereiche aufweisen verändert werden kann, wobei der Griffrahmen immer mit einem austauschbaren Griffbereichspassstück ergänzt werden, wobei die zweite Griffschale gebildet ist, wobei die Griffrahmen und die Griffbereichspasstücke miteinander wirkendende Verbindungsmöglichkeiten aufweisen. Die Griffrahmen sind dabei schwenkbeweglich an ihrem jeweils ersten Längskantenbereich miteinander verbunden, wobei die Griffrahmen entlang ihrer zweiten Längskantenbereiche offen sind und eine Maulöffnung begrenzen, wobei an diesen zweiten freien Längskantenbereichen ein Klickverschluss oder ein Magnetbandverschluss an den Griffrahmen ausgebildet sein kann, wobei aber auch ein oder mehrere Verschlüsse an den Griffbereichspassstücken angeordnet sein können, wobei in einem geöffneten Zustand des Schutzgriffes die Maulöffnung zum Umgreifen von einer Einkaufswagenschiebestange ,einer Kinderwagenschiebestange, einer Türklinke, einer Türgriffstange, einem Haushaltsmülltonnengriff/einem Gewerbemülltonnengriff, einer Geländerlaufstange, eines Altkleidercontainergriffes, einer Haltestange / einem Haltegriff von Bus/ S-Bahn und U-Bahn oder aber auch zum Umgreifen von Leinen und Seilen oder Henkeln z.B. von Einkaufskörben geeignet ist, wobei in einem geschlossenen Zustand die freien, zweiten Längskantenbereiche über den Verschluss dazu miteinander verbunden werden, so dass ein versehentliches Öffnen des Schutzgriffes verhindert ist. Die zylindrische Aufnahme/der Innenbereich des Schutzgriffes gemessen in seinem Innenbereich beträgt 5 cm Durchmesser, wobei die Gesamtlänge des Schutzgriffes 10 cm beträgt. Die zu umgreifenden Gegenstände müssen also in ihrem Außendurchmesser einen kleineren Durchmesser als der Schutzgriff in seiner Aufnahme/Innenbereich aufweisen und zusätzlich einen längsseitig gemessen freien Außenbereich aufweisen, welcher größer ist als der längsseitig gemessene Außenbereich des Schutzgriffes, wobei die Gegenstände dann ein oder aber auch zwei eigene Endbegrenzungen aufweisen können, damit der Schutzgriff diese Gegenstände umgreifen und geschlossen werden kann und der Benutzer diese kontaktlos umgreifen/greifen/benutzen kann.

Der Schutzgriff, welcher aus einem oder aus mehreren Materialien hergestellt sein kann, weist erfindungsgemäß zwei Griffschalen mit je einem Griffrahmen und je ein Griffbereichspassstück auf, wobei die Griffrahmen in ihrem Außenbereich Verbindungsklicksysteme aufweisen und in ihrem Innenbereich ein Einschubsystem aufweisen können, wodurch der Innenbereich des Schutzgriffes mit den dazugehörigen Innenbereichspassstücken, welche mit dem Einschubsystem kompatible Verbindungsbereiche aufweisen verändert werden kann, wobei die Griffrahmen mit dazugehörigen austauschbaren Griffbereichspassstücken, verbindbar sind und so die Griffschalen gebildet werden, wobei der erste Griffrahmen den ersten und den zweiten wie oben genau beschriebenen Endbegrenzungskragen mit eigenen Funktionen, zum Greifen und Öffnen von Deckeln, Bedienen von Tastaturen/Touchscreen, Öffnen von Flaschen mir Kronkorken, aufbewahren und mitführen eines Einkaufswagenchips, mitführen des Schutzgriffes durch Loch für Schlüsselring oder Schlüsselband, aufweist, wobei der Griffrahmen der zweiten Griffschale keine Endbegrenzungen aufweist, wobei der zweite Griffrahmen ebenfalls mit einem austauschbaren Griffbereichspassstück über ein Klicksystem verbindbar ist, wodurch die zweite Griffschale gebildet wird. Zwischen den beiden Endbegrenzungskragen ist der Griffbereich ausgebildet. Der Durchmesser des Schutzgriffes ist im Griffbereich kleiner als der Durchmesser des Schutzgriffes an den Endbegrenzungskragen. Die tauschbaren Griffbereichspasstücke, welche eigene technische Funktionen aufweisen können z. b. Uhrzeit anzeigen, Sprache wiedergeben, leuchten etc. als auch die austauschbaren Innenbereichspassstücke, können in Farbe, Größe, Material, Form und Funktion unterschiedlich ausgebildet sein. Sie weisen eine Öffnung auf, um an z. B. dem Schlüsselband mit transportiert zu werden. Die Griffbereichspasstücke können dem Benutzer in Form von Zubehörteilen angeboten werden, so dass jeder Benutzer sich seinen eigenen auf seine Bedürfnisse angepassten Schutzgriff zusammenstellen kann und dadurch der Schutzgriff einen für den jeweiligen Benutzer größeren Verwendungszweck bekommt. Dies hat den Vorteil, dass der Schutzgriff nicht nur zum kontaktlosen Greifen / Umgreifen von Gegenständen dienlich ist, sondern dem Benutzer z.B. erspart wird, eine extra Taschenlampe z.B. mitzunehmen, wenn, er z.B. ein beleuchtetes Griffbereichspassstück oder zwei der z.B. beleuchteten Griffbereichspassstücke wählt, oder wenn er z. B. gern unterwegs Musik hört und ein Griffbereichspassstück wählt, welches ein integriertes Miniradio aufweist, Vorteil das kein extra Radio mitgeführt werden muss. Dabei können die Griffbereichspassstücke in ihrem Außenbereich auch eine U-förmige Außenwandung aufweisen, um mehr Bauraum zu schaffen, wobei der Innenbereich mit den Klickbereichen halbzylindrisch ist und an die Rahmen angepasst ist, wobei die Seitenbereiche des Schutzgriffes dann im geschlossenen Zustand eine zylindrische Aufnahme und einen teilweise geschlossenen Seitenbereich aufweisen. Durch die austauschbaren Passstücke sind viele Zusatzfunktionen realisierbar und der Schutzgriff gewinnt an Wert, so dass er schneller zum ständigen Begleiter im Alltag integriert werden kann, so wie auch Kleidung oder Schuhe tägliche Begleiter sind, sollte der Schutzgriff aufgrund der hohen Viren, Bakterien, Keim und Pilzbelastungen, durch einen natürlich auch immer größeren Zuwachs an Menschen auf der Welt und dadurch das viele Menschen auch sehr viel Reisen und Krankheiten aus fernen Ländern an zu greifenden /umgreifenden Gegenständen besonders im öffentlichen Raum übertragen werden können, etabliert werden. Durch die austauschbaren Passstücke ist der Nutzen für den Endverbraucher größer und offensichtlicher und ein Umdenken in Punkto kontaktlosen Greifen von verkeimten Gegenständen mit Hilfe dieses Schutzgriffes schneller zu realisieren. Durch Zusatzfunktionen wird der Endverbraucher den Schutzgriff öfter oder immer mit sich führen und diesen somit öfter nutzen und somit weniger Gefahr laufen sich und andere Menschen mit gefährlichen Krankheiten zu infizieren bzw. diese zu übertragen.

Die Griffrahmen sind schwenkbeweglich an ihrem jeweils ersten Längskantenbereich miteinander verbunden, wobei die Griffrahmen/Griffschalen entlang ihres zweiten Längskantenbereiches offen sind, wobei diese freien, zweiten Längskantenbereiche einen oder mehrere Verschluss /Verschlüsse aufweisen, wobei der Verschluss/ die Verschlüsse an den Griffrahmen z.B. Klicksystem in den Rahmen der Längskantenbereiche oder ein Magnetband an den Längskantenbereichen der Rahmen und /oder die Verschlüsse, /der Verschluss an den Griffbereichspassstücken der Griffschalen angeordnet sein kann und diese zusammen wirken. Als Verschlüsse für Griffbereichspassstücke können z.B. Schieberiegel, Schwenkverschluss mit einer Rastverbindung, Magnetverschluss, Klettband und Flauschteil dienen, wobei die Griffschalen in einem geöffneten Zustand des Schutzgriffes eine Maulöffnung zum Umgreifen von einer Einkaufswagenschiebestange, einer Kinderwagenschiebestange, einer Türklinke, einer Türgriffstange, eines Haushaltsmülltonnengriffes, eines Gewerbemülltonnengriffes, einer Geländerlaufstange, eines Altkleidercontainergriffes, einer Haltestange / einem Haltegriff von Bus oder Bahnen, Leinen, Seilen oder Henkeln bilden, wobei in einem geschlossenen Zustand die offenen Längskantenbereiche über den Verschluss, welcher fest verschließbar jedoch auch wieder öffenbar ist, miteinander verbunden werden und so ein ungewolltes Öffnen des Schutzgriffes verhindert ist. Der Schutzgriff mit den beiden Griffschalen bildet eine öffenbare und schließbare lockere Manschette. Dies hat den Vorteil, dass der Schutzgriff für die bereits genannten zu greifenden / umgreifenden Gegenstände dienlich ist und man als Benutzer diese Gegenstände kontaktlos greifen /umgreifen und bedienen / benutzen kann. Die Griffrahmen können mit unterschiedlichen Griffbereichspassstücken und Innenbereichspassstücken kombiniert werden, welche unterschiedliche Funktionselemente, Farben, Formen, Größen und Materialien aufweisen können. Der Benutzer kann somit den Schutzgriff an seine individuellen Bedürfnisse und seinen eigenen Geschmack anpassen.

Der Verschluss / die Verschlüsse können ein kraftschlüssiges Klicksystem an den Griffrahmen der offenen Längskantenbereiche oder ein kraftschlüssiges Magnetband an den Längskantenbereichen der Griffrahmen sein und /oder die Griffbereichspassstücke können den Verschluss / die Verschlüsse aufweisen oder zusätzliche Verschlüsse zu den Verschlüssen der Griffrahmen aufweisen.

Der Verschluss/ die Verschlüsse sind so gestaltet, dass der Schutzgriff in horizontaler als auch in vertikaler Anwendung verschließbar ist und ein versehentliches Öffnen verhindert ist. Es gibt viele Varianten, den Verschluss zu gestalten. Ein kraftschlüssiges Klicksystem oder ein kraftschlüssiges Magnetband an den Griffrahmen ist eine optisch sehr schöne und einfache Lösung. Desweiteren ist denkbar, als Verschluss z. B. einen Schieberiegel, einen Magnetverschluss, ein Klettband oder einen Schwenkverschluss mit Rastung an den Griffbereichspassstücken vorzusehen. Die Griffrahmen beider Griffschalen weisen eine halbzylindrische Aufnahme in ihren Seitenbereichen und eine halbzylindrische Innenwandung und eine halbzylindrische Außenwandung auf, wobei die Griffbereichspassstücke in ihrem Innenbereich halbzylindrisch an den Außenbereich der Griffrahmen angepasst sind, wobei der Außenbereich der Griffbereichspasstücke halbzylindrisch oder aber auch im wesentlichen U-förmig gestaltet sein kann. Eine im wesentlichen U-förmige Außenwandung der Griffbereichspassstücke hat den Vorteil das der Baubereich innerhalb der Griffschalen sich anders gestaltet und ein anderes Platzangebot aufweist um z. b. ein wiederbefüllbares Mini-Feuerzeug oder eine Uhr oder einen Taschenrechner zu integrieren oder andere technische Systeme z. B. Aufnahme und Wiedergabegerät oder ein Touchscreen Display oder Navigationssystem im Griffbereich zu integrieren.

Die Seitenbereiche, außerhalb der zylindrischen Aufnahmebereiche, wobei die Aufnahmebereiche immer einen Durchmesser von 5 cm aufweisen, können somit teilweise geschlossene Flächen aufweisen, wobei der zylindrische Aufnahmebereich im Seitenbereich und im Innenbereich des Schutzgriffes durchgängig 5cm Durchmesser beträgt.

Die im Folgenden beschriebenen Ausgestaltungen der Griffbereichspasstücke können Teil des Anspruch 1 genannten Griffbereichspassstücke sein oder in separaten, als Zubehörteilen angeboten werden, Griffbereichspasstücken realisiert sein, die der Nutzer austauschen kann.

Um dem Benutzer besonders guten Halt zu bieten, können die Griffsbereichspassstücke einen Griffbereich mit vier mit vier Fingermulden aufweisen. Alternativ kann der Griffbereich eben und ggf. mit integrierten technischen Systemen gestaltet sein. Desweiteren könnte der Griffbereich leicht wellenförmig zu den Endbegrenzungen in seinem Außenbereichsdurchmesser leicht ansteigend geformt sein. Der Schutzgriff kann viele verschiedene Materialien aufweisen und z. B. im Griffbereich zusätzlichen Komfort bieten. Ein besonderer Komfort in kalten Jahreszeiten, wo z.B. Griffe im öffentlichen Raum in Außenbereichen wie z. B. auf Bahnhöfen Geländerläufe umgriffen werden, kann durch Griffbereichspassstücke realisiert sein, welche ein gelartiges Material aufweisen, welches durch ein integriertes System erwärmbar ist und das System funktioniert wie bei einem Taschenwärmer, welches durch Druck der Finger das Gel erwärmt und zusätzlich ein anderes Greifgefühl im Griffbereich schafft. Oder aber auch für Sportler, welche den Schutzgriff ggf. an Trainingsgeräten, wobei Trainingsgeräte oft mit schwitzigen Händen angefasst werden, verwenden, könnte ein Gel verwendet werden, was wie ein Kühlkissen funktioniert und den Griffbereich gestaltet und nicht nur vor dem Schweiß der anderen Benutzer, sondern auch vor Schwielen an den Händen schützt.

Für die Griffsbereichspassstücke können auch sehr gut antibakterielle Materialen verwendet werden, z. B. Materialien die mit Heilsteinessenzen versetzt sind, welche mit Viren und Bakterien abwehrenden Schwingungen aufgeladen sind aufweisen, welches für zusätzlichen Schutz sorgt oder aber es können Heilsteine im Griffbereich integriert sein. Der Griffbereich kann ein Wort oder Schriftzüge aufweisen z.B. Werbebotschaften oder andere Wörter. Dies hat neben dem Werbeeffekt den Vorteil, dass Verwechslungen z. B. Von Einkaufswagen, während des Einkaufs, oder Mülltonnen in z. B. großen Wohnblocks durch so gekennzeichnete Schiebestangen "auf einen Blick" vermieden werden können.

Es kann vorteilhaft für stumme, taube oder blinde Menschen sein, wenn der Schutzgriff über ein integriertes Aufnahme- und/oder Wiedergabegerät zum Aufnehmen und Wiedergeben von Audio-, Video- und/oder Text-Botschaften in Griffbereichspasstücken aufweist. Gerade blinde, taube und oder stumme Menschen können sich oft nicht genügend mitteilen, um z. B. beim Einkaufen anderen Menschen darauf hinzuweisen, da sie nicht sehen / sagen/ hören, ob sie wie in z. B. Zeiten einer Corona-Pandemie den Mindestabstand einhalten. Diesen Menschen kann mit einer Aufnahmefunktion und einem Wiedergabegerät das Leben erleichtert werden, durch vorherige Aufnahme kann anderen Menschen z. B. während eines Einkaufs über das integrierte Mini-Wiedergabegerät mit Lautsprecher mitgeteilt werden, dass sie bitte auf den Mindestabstand achten müssen, so dass die Menschen mehr Rücksicht nehmen können.

Griffsbereichspassstücke können ein integriertes akustisches Ausgabemedium in Form eines Lautsprechers und/oder ein Mikrofon und/oder ein Funkmittel und/oder ein Mini-Radio integriert aufweisen, welches über Bluetooth oder WLAN über ein Funknetzwerk mit z. B. eines Geschäft, in dem man gerade einkauft, verbindet, wobei über das Ausgabemedium über das Funknetzwerk empfangene Audiobotschaften dem Benutzer des Schutzgriffs abspielbar sind. Es können in der Werbung befindliche Produkte angesagt werden, dies erspart Papierwerbung, Coronaviren z. B. halten sich mitunter eine Zeit an Papier und außerdem wird somit die Umwelt geschont und die Geschäfte haben weniger Kosten bei der Papierwerbung und ggf. Papierentsorgung.

Es ist vorteilhaft, wenn Griffsbereichspassstücke eine Leuchtfläche insbesondere mit einem elektrischem Leuchtmittel bspw. mindestens einer LED aufweisen, z. B. für Notfallsituationen oder zum Ausleuchten der eigenen Handtasche im Dunkeln, wenn man z. B. seinen Schlüssel sucht, dies hat den Vorteil das man keine extra Taschenlampe mitführen muss.

Es ist vorteilhaft, wenn der Griffbereich über die Griffbereichspasstücke einen mit einer Flüssigkeit (wieder-)befüllbaren Hohlraum aufweist, wobei der Hohlraum über einen eigenen öffenbaren und schließbaren Verschluss verfügt und z.B. einem Desinfektionsmittel wiederbefüllbar ist, wobei durch Zusammendrücken des Griffbereiches die Flüssigkeit über einen Spender und den öffenbaren Verschluss wieder abgegeben werden kann.

Griffsbereichspassstücke können ein verschließbares Aufbewahrungsfach z. B. für einen losen Schlüssel, oder einen Einkaufzettel aufweisen.

Im eiskalten Wintern kann es von Vorteil sein, wenn ein Griffbereichspassstück einen handschuhähnlichen Aufsatz, ähnlich wie bei Eiskratzern mit Handschuh aufweist, da hierdurch zum einen die Finger z. B. vor Schnee oder Regen geschützt sind und zum anderen die Finger gewärmt werden. Rissige Hände, welche bei nasskaltem Wetter schnell entstehen, ermöglichen es, bestimmten Keimen dem Körper mehr zu schaden. Rissige Hände können damit vermieden werden.

Es kann von Vorteil sein, wenn ein Griffbereichspassstück ein integriertes Alarmgerät aufweist, welches durch Drücken einer Taste oder durch Zug an einer Schnur ausgelöst wird und ein akustisches Signal ausgibt, so dass der Benutzer, wenn er z. B. anders nicht auf sich aufmerksam machen kann, Hilfe "herbeirufen" kann.

Gerade auf Messen ist es vorteilhaft, wenn ein Griffbereichspassstück einen flachen Taschenrechner aufweist, weil man dann nicht dem Zwang unterliegt, einen bereits viel benutzten Taschenrechner z. B. einer seiner Lieferanten zu benutzen, denn diese Taschenrechner wandern durch viele ungewaschene Hände und werden erfahrungsgemäß nicht desinfiziert.

Griffsbereichspassstücke können eine Tastatur / ein Touchscreen und ein schriftlichen Wiedergabebereich aufweisen, um zum Beispiel eigene Notizen für den Einkauf einzutragen und sich während des Einkaufs anzeigen zu lassen.

Zur Stromversorgung der ggf. vorhandenen elektrischen Elemente ist es vorteilhaft, wenn der Griffbereich einen Akkumulator (Akku) aufweist. Der Akku ist vorzugsweise über einen USB-Anschluss ladbar. Alternativ oder zusätzlich kann der Griffbereich Solarzellen aufweisen, wobei der Akkumulator mittels der Solarzellen aufladbar ist. Alternativ kann der Griffbereich ein Batteriefach aufweisen, in das eine Batterie eingesetzt werden kann.

Der Durchmesser der Aufnahme und des Innenbereiches des Schutzgriffes beträgt 5cm, wenn keine Innenbereichspassstücke angewendet werden. Der Durchmesser wird im geschlossenen Zustand des Schutzgriffes gemessen. Es können somit Stangen / Griffe / Klinken / Seile / Leinen / Henkel umgriffen und bedient / benutzt werden, welche einen kleineren an ihrem größten Punkt gemessenen Durchmesser aufweisen, wobei diese Gegenstände zylindrisch, eckig oder anders geformt sein können, wobei die zu umgreifenden Gegenstände eine längsseitig gemessene freie Länge von über 10 cm aufweisen müssen, da der Schutzgriff längsseitig gemessen eine Gesamtlänge von 10 cm aufweist, wobei die zu umgreifenden Gegenstände eine oder zwei eigene Endbegrenzungen aufweisen können. Die Griffrahmen können auch in ihrem Innenbereich Klickverbindungen / oder Einschiebeverbindungen z.B. in Form einer Doppelwandigkeit der Griffrahmen aufweisen, welche mit Innenbereichspassstücken, welche kompatible Verbindungen aufweisen kombinierbar sind und den Innenbereich hinsichtlich der Aufnahmegröße oder der Aufnahmeform oder auch hinsichtlich des Materials im Innenbereich des Schutzgriffes oder aber auch in der Funktion des Schutzgriffes verändern können. Innenbereichspassstücke verfügen über kompatible Verbindungssysteme in ihrem Außenbereich, welche mit den Verbindungssystemen der Griffrahmen in ihrem Innenbereich fest, jedoch wieder lösbar verbunden werden können. Die Innenbereichspasstücke können als Zubehörteile dem Benutzer angeboten werden und weisen immer ein Loch auf, um mit am Karabinerhaken, Schlüsselring oder Schlüsselband transportiert und mitgenommen werden zu können, was für z.B. vielreisende Benutzer sehr wichtig ist, damit sie immer alle benötigten Passstücke bei sich führen, um den optimalen Schutz und Nutzen jederzeit verfügbar zu haben, wodurch der Benutzer selbst entscheiden kann, ob er den Aufnahme- und Innenbereich verkleinern will, was durch jedes Innenbereichspassstück zunächst der Fall ist, weil man ja im Innenbereich des Schutzgriffes die Passstücke einfügt und somit die Aufnahme und den Innenbereich des Schutzgriffes verkleinert, wobei die Innenbereichspassstücke neben den verkleinernden Funktionen wie bereits erwähnt, andere Funktionen aufweisen können.

Die Innenbereichspassstücke weisen immer einen Verbindungsbereich in ihrem Außenbereich auf, welcher mit dem Verbindungsbereich im Innenbereich der Griffrahmen kompatibel fest verbindbar und wieder lösbar ist und desweiteren immer eine Öffnung zum Transport z. b. Am Schlüsselring auf und desweiteren können die Innenbereichspassstücke noch folgendes aufweisen:
- einen Schaumstoff in ihrem Innenbereich, welcher halbzylindrisch oder U-förmig sein kann, so dass man, wenn man zwei dieser Innenbereichspassstücke benutzt, eine engere zylindrische oder eine eckige Aufnahme schafft. Dies ist von Vorteil, wenn man zylindrische oder eckige Türklinken, Seile / Leinen oder Henkel enger umgreifen will, um einen besseren Halt zu schaffen, zusätzlich umgreift man durch den Schaumstoff diese Gegenstände schonender, kann diese kontaktlos bedienen, wobei der Schutzgriff dazu geschlossen wird.
- eine geschlossene, vorzugsweise halbzylindrische Endfläche, welche einen Seitenbereich des Schutzgriffes verschließt, wenn man zwei dieser Passstücke verwendet und den Schutzgriff dazu schließt, so dass der Schutzgriff wie eine Hülle z.B. auf Schubkarrengriffe / Sackkarrengriffe übergestülpt werden kann und somit die Schubkarre/ Sackkarre kontaktlos angehoben und geschoben werden kann.
- eine Kupplungsvorrichtung, welche es ermöglicht, zwei Schutzgriffe zu einem längeren Schutzgriff zu verbinden, um einen anderen Griffbereich zu schaffen, wobei das Kupplungsstück eine eigene schwenkbewegliche Verbindung und einen passenden offenen Längskantenbereich aufweist.
- einen Schnittbereich aufweisen, so dass der Schutzgriff wie eine Knipse verwendet werden kann um zum Beispiel stachlige oder stark saftende Pflanzen zu ernten wie z. B. Brennnesseln, Sanddorn, Hagebutten oder Löwenzahn. Dies ist ein praktischer Zusatznutzen zum Schonen der Hände für Benutzer welche z. B. viel mit Heilpflanzen arbeiten.

Die schwenkbewegliche Verbindung zwischen den Griffrahmen kann mit folgenden, möglichen schwenkbeweglichen Verbindungselementen gelöst werden:
- ein oder mehrere Scharnier/e,
- ein oder mehrere Feder/n,
- ein oder mehrere Gelenk/e, und/oder
- ein oder mehrere Kunststofflippe/n.

Folgende Materialien können für den Schutzgriff verwendet werden:
- Metall,
- Kunststoff,
- magnetische Materialien,
- antibakterielle Materialien wie z. b. Heilsteine,
- gelartige Materialien, welche wärmen und oder kühlen können oder einfach nur ein angenehmes Griffgefühl vermitteln,
- reflektierende und Effektmaterialien,
- Stoffe,
- Heilsteine z. B. für den Griffbereich,
- Materialien, die zur Umsetzung der technischen Funktionen nötig sind.

### Anwendungsmöglichkeiten des Schutzgriffes:

Der Schutzgriff ist geeignet zum Umgreifen und Ziehen/Schieben von Stangen mit zwei eigenen Endbegrenzungen, wobei die Stangen waagerecht umgriffen, geschoben oder gezogen werden, wie eine Einkaufswagenschiebestange oder eine Kinderwagenschiebestange, wobei man dazu vorzugsweise zwei Schutzgriffe verwendet, für jede Hand eine. Einkaufswagenschiebestangen oder Kinderwagenschiebestangen oder andere waagerecht zu greifende /umgreifende Schiebestangen von rollbaren Gegenständen können unterschiedliche Griffbereiche und Durchmesser aufweisen, wobei die Schiebestangen ein oder aber auch zwei eigene Endbegrenzungen aufweisen können. Ferner können Mülltonnenschiebestangen von Gewerbemülltonnen und Hausmülltonnen umgriffen und die Tonnen gezogen oder geschoben werden. Die Anwendung des Schutzgriffes bei o.g. Gegenständen ist identisch. Voraussetzung ist, dass die zu umgreifenden Gegenstände einen im Durchmesser kleineren Außenbereich als der Schutzgriff im geschlossenen Zustand in seinem Innenbereich aufweisen und die Gegenstände einen längsseitig gemessenen freien Außengriffbereich aufweisen, der größer ist als die Länge des Schutzgriffes. Die Anwendung wird an dem Beispiel Einkaufswagenschiebestange erörtert. Die erste Griffschale wird auf der zu umgreifenden Schiebestange von oben aufgelegt, eine Maulöffnung ist sichtbar, die zweite Griffschale wird von unten gegen die erste Griffschale gegengedrückt, wobei die Schalen schwenkbeweglich miteinander verbunden sind und der freie Längskantenbereich wird mit dem Verschluss oder den Verschlüssen für die Benutzung fest verschlossen, so dass ein versehentliches Öffnen verhindert ist. Der Schutzgriff bildet eine lockere Manschette, wobei diese Manschette sich rotierend um den Griffbereich drehen könnte, doch durch Schub- oder Ziehbewegungen drückt der Schutzgriff mit einem Teil seines Innenbereiches fest an die Schiebestange an, so dass der direkte Kontakt der Hände mit der Einkaufswagenschiebestange/ anderen Schiebestangen verhindert ist und der Einkaufwagen problemlos geschoben oder gezogen werden kann.

Eine weitere Anwendung des Schutzgriffes ist zum Umgreifen, Ziehen und/oder Schieben von Stangen, welche an rollbaren Gegenständen angebracht sind und keine oder nur eine eigene Endbegrenzung aufweisen und senkrecht umgriffen werden, z. B. Kleiderständerschiebestangen von Kleiderständern auf Rollen, welche in großen Herstellungsfirmen, welche oft sehr schlechte Hygiene aufweisen oder aber auch Kleiderständer welche z. B. auf Messen von vielen Menschen angegriffen werden und somit mit Viren oder bakteriell belastet sein können, wobei diese Schiebestangen der Kleiderständer auch unterschiedliche Durchmesser und Griffbereiche aufweisen. Somit ist auch hier der Durchmesser und die Länge ausschlaggebend um den Schutzgriff anbringen zu können. Die erste Griffschale wird auf der zu umgreifenden senkrechten Stange des Kleiderständers von hinten angelegt, wobei die Maulöffnung sichtbar bleibt. Die zweite Griffschale wird von vorne gegen diese Stange gedrückt, wobei die Griffschale fest über den Verschluss miteinander verschlossen. Der Schutzgriff bildet auch hier eine lockere Manschette, wobei diese Manschette um den Griffbereich rotierend bewegt werden könnte, das wird durch Zieh- oder Schiebbewegungen dadurch verhindert, dass der Benutzer den Schutzgriff mit einem Teil seines Innenbereiches an die Kleiderstange andrückt. Dabei hält der Benutzer mit dem zweiten Schutzgriff die waagerechte Stange in der anderen Hand, wie bei Einkaufwagenschiebestange, nur dass er hierbei noch den Schutzgriff an eine Endbegrenzung der waagerechten Stange des Kleiderständers drückt. Der Benutzer kann nun kontaktlos Ziehen, Schieben und Lenken, wobei sich unterschiedliche Innenbereiche an die vorhandene Schiebestange drücken, wie oben bereits erwähnt.

Ferner kann der Schutzgriff an Haltestangen in Bus und Bahn verwendet werden. Der Schutzgriff ist geeignet zum Umgreifen und sich Festhalten an Stangen, welche senkrecht gegriffen werden und einem Halt bieten, wie Haltestangen an Bus und Bahnen. Diese Haltestangen in Bus und Bahn weisen unterschiedliche Durchmesser und Griffbereiche auf und werden senkrecht umgriffen. Voraussetzung ist eine im wesentlichen gerade Haltestange und, dass die zu umgreifenden Haltestangen einen im Durchmesser kleineren Außenbereich als der Schutzgriff im geschlossenen Zustand in seinem Innenbereich aufweisen und die Gegenstände einen längsseitig gemessenen freien Außengriffbereich aufweisen, wobei dieser ein oder zwei eigene Endbegrenzungen aufweisen kann und der größer ist, als der längsseitig gemessene Außengriffbereich des Schutzgriffes.

Die Anwendung an einer Haltestange ist identisch wie bei der senkrecht zu umgreifenden Schiebestange eines Kleiderständers auf Rollen zu sehen, mit dem Unterschied, dass der Benutzer natürlich die Haltestangen nicht zieht oder schiebt, sondern sich nur durch seine eigene Gewichtsverlagerung kontaktlos an den Haltestangen festhält, wobei sich bei Bremsbewegung oder Beschleunigung der Innenbereich des Schutzgriffes mit einem Teilbereich seines Innenbereiches an der Haltestange andrückt, so dass der Benutzer sich kontaktlos an der Stange festhalten kann.

Weiterhin kann der Schutzgriff zum Umgreifen und kontaktlosen Festhalten an Haltegriffen in öffentlichen Verkehrsmitteln verwendet werden, indem man ihn einfach auf die zu umgreifenden Haltegriffe aufklickt. Wobei die Bedienungen der Größenangaben wie bereits mehrfach beschrieben Voraussetzung zum Umgreifen und festhalten sind, wobei die Haltegriffe dann auch ein oder zwei eigene Endbegrenzungen aufweisen können.

Türklinken/Türgriffstangen werden sehr oft und viel von Menschen mit unsauberen Händen gefasst und somit werden schnell und viel Krankheiten übertragen. Türklinken / Türgriffstangen können sehr unterschiedlich gestaltet sein. Der Schutzgriff ist geeignet für eine Türklinken, Türgriffstangen mit vielerlei Formen, wobei der Durchmesser der Türklinke radial zum Längskantenbereich gemessenen kleiner sein muss, als der Innendurchmesser des Schutzgriffes, wobei die Türklinken einen zylindrische oder eckigen Querschnitt oder andere Formen dabei aufweisen können, wobei sie längsseitig gemessen natürlich auch einen längeren, freien Außenseitenbereich aufweisen müssen als der Schutzgriff in seinem Außenseitenbereich. Anwendung erklärt anhand einer Türklinke. Man legt die erste Griffschale auf die waagerecht zu greifende Türklinke auf , wobei man vorher ein Innenbereichspassstück in den Schutzgriff einführen kann, oder man legt die Griffschale einfach so auf, dann kann man den Schutzgriff entweder Verschließen oder offen aufliegen lassen und kann nun somit die Türklinke kontaktlos greifen oder umgreifen und runterdrücke und die Tür schließen oder öffnen kann, ohne mit der Türklinke in direkten Kontakt zu kommen. Ferner kann der Schutzgriffes auf einer Türklinke im geschlossenen Zustand verwendet werden, wobei der Schutzgriff eine Manschette darstellt und der Benutzer den Schutzgriff einfach auf die Türklinke aufschiebt. Der Schutzgriff verhält sich dann genauso, wie wenn er mit der Maulöffnung aufgelegt und danach verschlossen wird, wobei die zweite Griffschale von unten gegengedrückt wird, wobei die erste Griffschale und die zweite Griffschale fest schwenkbeweglich miteinander verbunden sind und über den Verschluss/ die Verschlüsse fest verschlossen sind. Der Schutzgriff bildet eine lockere Manschette, welche sich rotierend um die Türklinken drehen könnte. Dies wird verhindert, indem der Benutzer von oben beim Greifen Druck auf den Schutzgriff gibt und die Türklinke runterdrückt, oder zieht oder schiebt, somit die Tür öffnet oder schließt, wobei sich unterschiedliche Innenbereiche des Schutzgriffes an die Türklinke andrücken. Durch den Einsatz von Innenbereichspassstücken kann die Türklinke z. B. schonender und enger gefasst werden.

Ferner können Henkel von Taschen, Rucksäcken und Einkaufskörben mit dem Schutzgriff kontaktlos umgriffen und getragen werden. Was vorteilhaft sein kann, weil auch Einkaufskorbgriffe oder gerade Reisegepäck, was z. B. Auf Flughäfen durch vielerlei ungewaschene Hände wandert Krankheiten übertragen kann. Geländerlaufstangen, besonders im öffentlichen Raum, weisen bekanntlich ebenfalls hohe Keimbelastungen auf. Der Schutzgriff kann auf einer Geländerlaufstange verwendet werden, wobei diese schräg nach oben oder eben nach unten verläuft, wobei Geländerlaufstangen ähnlich wie Türklinken, Einkaufswagen und anderen zu umgreifenden Gegenständen verschiedene Durchmesser und Formen aufweisen. Auch hier sind die Voraussetzungen wie immer, was Durchmesser und Längenangaben angeht, wie vorher mehrfach beschrieben.

Der Benutzer legt die erste Griffschale von oben auf das Geländer, schließt die Maulöffnung, indem er die zweite Griffschale von unten dagegen führt und verschließt die Griffschalen mit dem Verschluss/den Verschlüssen und führt den Schutzgriff, welchen er fest in der Hand hält, mit leichtem Zug am Schutzgriff, also mit leichter Gewichtsverlagerung vom Geländer weg, wobei ein Teil des Schutzgriffes fest an das Geländer gedrückt wird, wobei der Schutzgriff trotzdem weiter schiebbar ist bzw. über das Geländer mitgeschoben werden kann, so dass man das Geländer kontaktlos greif und sich über den verschlossenen Schutzgriff am Geländer halten kann.

Der Schutzgriffes kann an einem Altkleidercontainergriff verwendet werden, wobei die Griffe von Altkleidercontainern eine oder aber auch zwei eigene Endbegrenzungen aufweisen können und unterschiedliche Durchmesser aufweisen. Voraussetzung ist, dass der Außengriffbereichsdurchmessers des Altkleidercontainers kleiner ist als der Innenbereichsdurchmesser des Schutzgriffes im Griffbereich im geschlossenen Zustand und das der Altkleidercontainergriff längskantenbereichsseitig gemessen eine längere Längsseite aufweist als der Schutzgriff längskantenbereichsseitig gemessen an seiner Längsseite. Die erste Griffschale wird auf den Altkleidercontainergriff aufgelegt, die Maulöffnung wird geschlossen, indem die zweite Griffschale von unten gegengedrückt gegen den Altkleidercontainergriff gedrückt wird und der Verschluss geschlossen wird. Somit kann der Altkleidercontainergriff kontaktlos umgriffen werden und der Container durch Hebe- oder Senkbewegung geöffnet werden.

Der Schutzgriff kann zum Öffnen von Deckeln verwendet werden. Möchte der Benutzer kontaktlos verkeimte Deckel greifen, z.B. einen WC-Deckel auf einem Rastplatz oder einen Mülleimer-/Mülltonnendeckel im öffentlichen Raum oder einen Briefkastendeckel, führt er dazu den Schutzgriff, welcher dazu geschlossen ist, mit der Endbegrenzungsplatte mit integriertem Einkaufswagenchip und ausgestanztem Loch an den Bereich, wo der Deckel seinen offenen Seitenbereich aufweist und schiebt mit Druck die Platte zwischen den z.B. WC-Deckel und die WC-Brille und greift somit den Deckel kontaktlos und hebt diesen an. Ebenso verfährt der Benutzer beim Öffnen von Mülltonnendeckeln. Zum Absenken des Deckels kann der Benutzer den Schutzgriff im geöffneten Zustand wie eine Zange benutzen, den Deckel greifen, den Schutzgriff zusammendrücken (wobei der Schutzgriff geöffnet ist und den Deckel einklemmt) und den Deckel wieder absetzen ohne mit dem Deckel selber in Berührung zu kommen.

Der Pin des Schutzgriffes kann zum Bedienen von Tastaturen / Touchscreens verwendet werden, welche in ihrem Bedienfeld keine eigenen Endbegrenzungen aufweisen. Greift der Benutzer die Tastatur, führt er dazu den Schutzgriff, welcher dazu geschlossen ist, dadurch eine Art dicken Stift bildet, mit dem zweiten Endbegrenzungskragen, der einen Pin aufweist, an die Tastatur, greift diese kontaktlos und bedient die Tastatur. Der Benutzer kommt beim Greifen von einem der oben genannten Gegenstände nur mit den Außenseiten des Schutzgriffes in Verbindung, nicht aber mit dem Gegenstand selber. Daher ist der Benutzer vor dem direkten Kontakt mit Viren, Bakterien, Pilzen, Keimen oder aber auch Pollen, oder Pestiziden, welche in manchen besonders trockenen Sommern kilometerweit durch den Wind auf viele Gegenstände, wie z. B. Türklinken im Außenbereich getragen werden und besonders für Allergiker gefährlich sein können geschützt.

Vorzugsweise ist der Schutzgriff aus mehreren Materialien hergestellt. Der Schutzgriff kann aber auch aus nur einem Material hergestellt werden, die in der Spülmaschine gereinigt werden können.

Vorzugsweise ist der Schutzgriff aus Kunststoff und rostfreiem Metall z.B. Edelstahl und ggf. magnetischen Materialien hergestellt.

Die Griffschalen weisen vorzugsweise Kunststoff und Edelstahl auf, wobei der Schutzgriff auch reflektierende Materialien, Effektmaterialien, gelartige Materialien, antibakterielle Materialien, Stoffe aufweisen kann. Metall kann zur Herstellung für alle Bereiche oder nur für Teilbereiche des Schutzgriffes verwendet werden, z. B. für die Griffrahmen und die Endbegrenzungen oder aber auch für die Verbindungssysteme oder aber auch für Verschlüsse und schwenkbewegliche Verbindung z. B. Schwenkscharniere.

Ferner kann Kunststoff zur Herstellung für alle Bereiche oder nur für Teilbereiche des Schutzgriffes verwendet werden. Vorzugsweise sind die Kunststoff-Teile des Schutzgriffes in einem Spritz- oder Druckgussverfahren herstellbar.

Der Griffbereich kann aus einem reflektierenden Material gebildet sein. Der Griffbereich Effektmaterialien oder antibakterielle Materialien oder schweiß aufnehmende Materialien oder Stoffe, z.B. Schaumstoff oder Latexstoff, oder magnetische Materialien und Materialien aufweisen, welche für technische Zusatzfunktionen nötig sind.

Die Griffschalen bestehen aus Griffrahmen, wobei die Griffrahmen der ersten Griffschale immer über die zwei oben beschriebene Endbegrenzungskragen verfügen, und mit dazugehörigen Griffbereichspassstücken ergänzt werden und so zur ersten Griffschale werden, wobei die zweite Griffschale auch aus dem zweiten Griffrahmen und dem zweiten Griffbereichspassstück zusammengesetzt wird, wobei die Griffbereichspassstücke austauschbar sind, und so der Schutzgriff im Griffgefühl/ Griffkomfort, als auch in Form, in Farbe, Material und Funktion veränderbar ist, so dass der Benutzer wählen kann, ob er einen glatten oder aber auch mit Fingermulden ausgearbeiteter Griffbereich z. b. aus Kunststoff, oder Metall oder Stoff oder gelartigem Material, welches kühlt oder wärmt oder z.B. zusätzlichen Schutz durch antibakterielles Material bevorzugt, der Benutzer kann wählen ob der Griffbereich technische Funktionen z. B. Aufweisen soll und sich so seinen eigenen Schutzgriff nach seinen Neigungen und Bedürfnissen zusammenstellen. Er kann den Schutzgriff auch über Innenbereichspassstücke in Funktion, Größe und Nutzen verändern, denn die Innenbereichspassstücke können ebenfalls in verschiedenen Ausführungen als Zubehörteile angeboten werden.

Der Schutzgriff begrenzt dabei in seinem geschlossenen Zustand mit seinen Griffschalen eine Aufnahme von 5 cm Durchmesser ohne Innenbereichspasstücke und weist eine erste stirnseitige Öffnung an seiner ersten Stirnseite und eine zweite stirnseitige Öffnung an seiner zweiten Stirnseite und eine Gesamtlänge von 10cm aus.

Es gibt unterschiedliche Möglichkeiten, die Erfindung auszugestalten und weiterzubilden. Hierfür darf zunächst auf die dem Patentanspruch 1 nachgeorderten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:
- Fig. 1: in einer schematischen perspektivischen Darstellung einen Schutzgriff mit zwei Griffschalen, die jeweils aus einem Griffrahmen und einem Griffbereichspassstück gebildet sind, und
- Fig. 2: in einer schematischen perspektivischen Darstellung die beiden Griffrahmen ohne die Griffbereichspassstücke.

Der Schutzgriff 1 dient dem Anwender zum Schutz der Hände vor Bakterien, Viren, Pilzen, Keimen oder aber auch Pollen, Pestiziden welche in extrem heißen Sommern auch auf z. B. Türklinken vorzufinden sind und z. B. für Allergiker ein Problem darstellen können, da man ihn einfach und leicht über o. g. Gegenstände anbringen und diese nutzen und bedienen kann, was das Risiko sich mit gefährlichen Krankheiten zu infizieren stark einschränkt.

Einfache Bedienung und Wiederverwendbarkeit zeichnen den Schutzgriff 1 aus.

Der Schutzgriff 1 dient dem Anwender zum Schutz der Hände vor Bakterien, Viren etc. da man ihn einfach und leicht über o. g. Gegenstände anbringen und diese nutzen und bedienen kann. Einfache Bedienung und Wiederverwendbarkeit zeichnen den Schutzgriff 1 aus.

Der Schutzgriff 1 weist zwei Griffschalen 2, 3 auf. Die Griffschalen 2, 3 sind über einen Verbindungsbereich in Form einer flexiblen Kunststofflippe 4 oder Scharnieren (nicht dargestellt) entlang ihrer rückwärtigen Längsseiten schwenkbeweglich miteinander verbunden. Die Griffschalen 2, 3 können zum Umgreifen von insbesondere zylindrischen Gegenständen genutzt werden (nicht dargestellt). Dazu begrenzen die Griffschalen 2, 3 im geschlossenen Zustand eine Aufnahme 5 und weisen endseitige Öffnungen auf. Die Griffschalen 2, 3 können soweit auseinandergeklappt werden, dass sie einen Gegenstand, wie beispielsweise die Griffstange einer Mülltonnenschiebestange (nicht dargestellt) umgreifen können. Der Schutzgriff 1 bildet daher eine Art öffenbare und schließbare Manschette. Die obere Griffschale 2 und untere Griffschale 2, 3 sind im Wesentlichen halbröhrenförmig ausgebildet

An den stirnseitigen Enden der oberen Griffschale 2 sind zwei höher abstehende Endbegrenzungen, die sogenannten Endbegrenzungskragen 6, 7 ausgebildet. Somit ist ein versehentliches Abrutschen der Hände auf den eigentlichen Einkaufswagengriff/ Türklinke verhindert.

Mittig an der oberen Griffschale 2, als auch an der unteren Griffschale 3 des so entstandenen Schutzgriffes 1 befindet sich außen, an den freien öffenbaren Längskantenbereichen ein Verschluss 8 in Form eines Klickverschlusses (nicht dargestellt) oder Magnetbandes (nicht näher dargestellt).

Eine einfache Bedienung und Wiederverwendbarkeit zeichnen den Schutzgriff 1 aus.

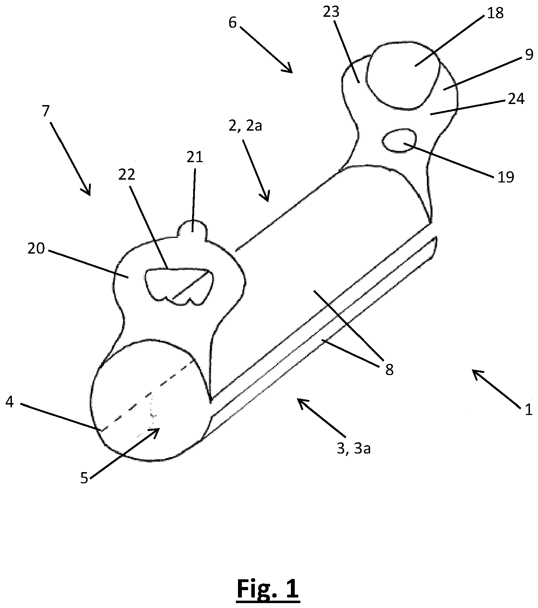

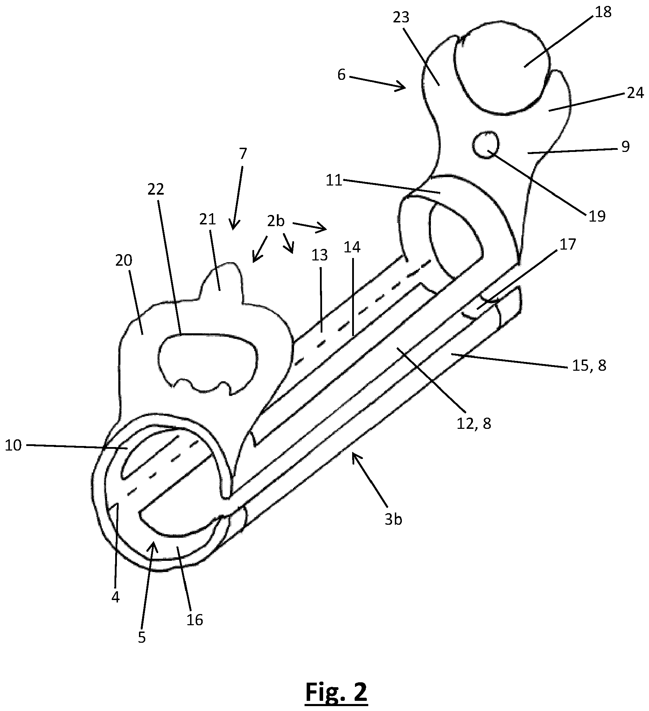

Das Besondere an dem Schutzgriff 1 ist, dass die Griffschalen 2, 3 je einen Griffrahmen 2b, 3b (dargestellt in Fig. 2) und je ein Griffbereichspassstück 2a, 3a (dargestellt in Fig. 1) aufweisen, wobei die Griffrahmen 2b, 3b in ihrem Außenbereich Verbindungsklicksysteme (nicht dargestellt) aufweisen.

Die Griffrahmen 2b, 3b, welche Verbindungsklicksysteme (nicht dargestellt) in ihrem Außenbereich aufweisen, sind mit dazugehörigen Griffbereichspassstücken 2a, 3a, welche Verbindungsklicksysteme (nicht dargestellt) in ihrem Innenbereich aufweisen, verbindbar oder verbunden.

Der erste Griffrahmen 2b weist die verbundenen Rahmenteile 10, 11, 12, 13 auf. Die endseitigen Rahmenteile 10, 11 sind halbkreisförmig gebogen und über die Längsrahmenteile 12, 13 verbunden. Der zweite Griffrahmen 3b weist die verbundenen Rahmenteile 14, 15, 16, 17 auf. Die endseitigen Rahmenteile 16, 17 sind halbkreisförmig gebogen und über die Längsrahmenteile 14, 15 verbunden. Die Griffrahmen 2b und 3b sind über eine Kunststoffflippe (nicht näher dargestellt) oder über Scharniere (nicht dargestellt) entlang der Längsrahmenteile 13, 14 schwenkbeweglich miteinander verbunden.

An den Rahmenteilen 10, 11 des ersten Griffrahmens 2b sind die ersten und den zweiten Endbegrenzungskragen 6, 7 ausgebildet oder befestigt.

Der erste Endbegrenzungskragen 6 weist eine Platte 9 mit intergeriertem, herausnehmbarem Einkaufswagenchip 18 und ein Loch 19 auf, wobei das Loch 19 zum Anbringen eines Karabinerhakens (nicht dargestellt) oder eines Schlüsselbandes (nicht dargestellt) zum Transport des Schutzgriffes 1 geeignet ist.

Die Platte 9 dient zusätzlich zum Greifen und Anheben und Öffnen von WC-Deckeln, Mülltonnendeckeln, Briefkastendeckeln. Die beiden Schenkel 23, 24, die U-förmig den Einkaufswagenchip 18 umgreifen, können zusätzlich genutzt werden, um einen z.B. einen Einkaufsbeutel anzuhängen.

Der zweite Endbegrenzungskragen ist in Form einer Platte 20 ausgebildet und weist einen radial nach außen weisenden Pin 21 auf, mit welchem man Tastaturen (nicht dargestellt) und Touchscreens (nicht dargestellt) betätigen kann.

Zusätzlich ist in der Platte 20 ein Flaschenöffner 22 ausgebildet.

Der zweite Griffrahmen 3b weist keine Endbegrenzungskragen auf.

Der zweite Griffrahmen 3b wird ebenfalls mit einem Griffbereichspassstück 3a über ein Klicksystem verbunden, wodurch die zweite Griffschale 3 gebildet wird.

### Bezugszeichenliste

- 1: Schutzgriff
- 2: Griffschale
- 2a: Griffbereichspassstück
- 2b: Griffrahmen
- 3: Griffschale
- 3a: Griffbereichspassstück
- 3b: Griffrahmen
- 4: Verbindungsbereich
- 5: Aufnahme
- 6: Endbegrenzungskragen
- 7: Endbegrenzungskragen
- 8: Position des Verschlusses in Form eines Klickverschlusses oder eines Magnetbandes
- 9: Platte
- 10: Rahmenteil
- 11: Rahmenteil
- 12: Rahmenteil
- 13: Rahmenteil
- 14: Rahmenteil
- 15: Rahmenteil
- 16: Rahmenteil
- 17: Rahmenteil
- 18: Einkaufswagenchip
- 19: Loch
- 20: Platte
- 21: Pin
- 22: Flaschenöffner
- 23: Schenkel zum Halten des Einkaufswagenchips
- 24: Schenkel zum Halten des Einkaufswagenchips

## Patentansprüche

1. Schutzgriff (1) aus einem oder mehreren Materialien, mit einer ersten Griffschale (2), mit einer zweiten Griffschale (2), wobei die Griffschalen (2, 3) schwenkbeweglich an einem jeweils ersten Längskantenbereich miteinander verbunden sind, wobei die Griffschalen (2, 3) entlang ihrer zweiten Längskantenbereiche frei sind und eine Maulöffnung begrenzen, wobei an diesen zweiten freien Längskantenbereichen ein Verschluss (8) oder mehrere Verschlüsse angeordnet oder ausgebildet sind, wobei in einem geöffneten Zustand des Schutzgriffes (1) die Maulöffnung zum Umgreifen von einer Einkaufswagenschiebestange, einer Türklinke, einer Türgriffstange, einer Kinderwagenschiebestange, einem Haushaltsmülltonnengriff, einem Gewerbemülltonnengriff, Geländerlaufstangen, Altkleidercontainergriffen, einer Haltestange/ einem Haltegriff, von Bus, S-Bahn und U-Bahn, Leinen, Seile, Henkel geeignet ist, wobei in einem geschlossenen Zustand die freien, zweiten Längskantenbereiche über den Verschluss (8) miteinander verbunden sind, wobei der Schutzgriff zwei Endbegrenzungskragen (6, 7), nämlich einen ersten Endbegrenzungskragen (6) und einen zweiten Endbegrenzungskragen (7) aufweist, wobei zwischen den beiden Endbegrenzungskragen (6, 7) ein Griffbereich ausgebildet ist und der Außendurchmesser des Schutzgriffes (1) im Griffbereich kleiner als der Außendurchmesser des Schutzgriffes (1) an den Endbegrenzungskragen (6, 7) ist, **dadurch gekennzeichnet, dass** die Griffschalen (2, 3) je einen Griffrahmen (2b, 3b) und je ein austauschbares Griffbereichspassstück (2a, 3a) aufweisen, wobei die Griffrahmen (2b, 3b) in ihrem Außenbereich Verbindungsklicksysteme aufweisen, wobei die Griffrahmen (2b , 3b) mit dazugehörigen Griffbereichspassstücken (2a, 3a), welche Verbindungsklicksysteme in ihrem Innenbereich aufweisen, verbindbar oder verbunden sind, wobei der erste Griffrahmen (2b) den ersten und den zweiten Endbegrenzungskragen (6, 7) aufweist, wobei der erste Endbegrenzungskragen (6) eine Platte (9) mit intergeriertem, herausnehmbarem Einkaufswagenchip (18) und ein Loch (19) aufweist, wobei das Loch (19) zum Anbringen eines Karabinerhakens oder eines Schlüsselbandes zum Transport des Schutzgriffes (1) geeignet ist, wobei die Platte (9) zusätzlich zum Greifen und Anheben und Öffnen von WC-Deckeln, Mülltonnendeckeln, Briefkastendeckeln ausgebildet ist, wobei der zweite (7) Endbegrenzungskragen in Form einer Platte (20) ausgebildet ist und einen Pin (21) aufweist, mit welchem man Tastaturen und Touchscreens betätigen kann, wobei zusätzlich in der Platte (20) ein Flaschenöffner (22) ausgebildet ist, wobei das Griffbereichspassstück (3a) für den zweiten Griffrahmen (3b) einen ebenen Griffbereich ohne Endbegrenzungskragen aufweist, wobei der zweite Griffrahmen (3b) ebenfalls mit dem Griffbereichspassstück (3a) über ein Klicksystem verbunden oder verbindbar ist, wodurch die zweite Griffschale (3) gebildet ist.

2. Schutzgriff nach Anspruch 1, **dadurch gekennzeichnet, dass** der Verschluss (8) / die Verschlüsse an den Griffschalen (2, 3) ein Klicksystem an den Griffrahmen (2b, 3b) der Längskantenbereiche oder ein Magnetband an den Längskantenbereichen der Griffrahmen (2b, 3b), oder an den Griffbereichspassstücken (2a, 3a) der Griffschalen (2, 3) aufweisen.

3. Schutzgriff nach einem der vorstehenden Ansprüche, **dadurch gekennzeichnet, dass** die Verschlüsse, Magnetverschluss, Schiebe-/ Schwenkriegel oder Klettverschluss auch und/oder an den Griffbereichspasstücken (2a, 3a) angeordnet sind.

4. Schutzgriff nach einem der vorstehenden Ansprüche, **dadurch gekennzeichnet, dass** die Griffrahmen (2b, 3b) beider Griffschale (2, 3) eine halbzylindrische Form im Außen-/Innenbereich und eine halbzylindrische offene Aufnahme in den beiden Seitenbereichen aufweisen.

5. Schutzgriff nach einem der vorstehenden Ansprüche, **dadurch gekennzeichnet, dass** die Griffbereichspasstücke (2a, 3a) austauschbar sind und in ihrem Außenbereich sowohl halbzylindrisch, als auch im Wesentlichen U-förmig sein können, wobei sie in ihrem Innenbereich und ihren beiden seitlichen Aufnahmebereichen eine halbzylindrische Form aufweisen.

6. Schutzgriff nach einem der vorherstehenden Ansprüche, **dadurch gekennzeichnet, dass** die Griffbereichspassstücke (2a, 3a) einen ebenen Griffbereich aufweisen, welcher z.B. technische Funktionen aufweisen kann.

7. Schutzgriff nach einem der vorherstehenden Ansprüche, **dadurch gekennzeichnet, dass** das Griffbereichspassstück (2a, 3a) zu den Endbegrenzungen leicht wellenförmig ansteigend gestaltet ist.

8. Schutzgriff nach einem der vorstehenden Ansprüche, **dadurch gekennzeichnet, dass** die Griffbereichspassstücke (2a, 3a) einen Griffbereich mit vier Fingermulden aufweisen.

9. Schutzgriff nach einem der vorherstehenden Ansprüche,, **dadurch gekennzeichnet, dass** er nur Metall oder Kunststoff und/ oder Kunststoff und Metall und andere Materialien aufweist wie gelartiges Material, welches kühlen oder wärmen kann, oder eben nur ein angenehmeres Griffgefühl schafft, Effektmaterial, antibakterielles Material oder Material aufweist, welches für die technischen Funktionen benötigt wird.

10. Schutzgriff nach einem der vorstehenden Ansprüche, **dadurch gekennzeichnet, dass** das Griffbereichspassstück (2a, 3a) einen oder mehrere Schriftzüge aufweist.

11. Schutzgriff nach einem der vorstehenden Ansprüche, **dadurch gekennzeichnet, dass** eines der Griffbereichspasstücke (2a, 3a) ein integriertes Aufnahme- und/oder Wiedergabegerät zum Aufnehmen und Wiedergeben von Audio-Botschaften/Video-Botschaften/Text-Botschaften aufweist.

12. Schutzgriff **dadurch gekennzeichnet, dass** das Griffbereichspassstück (2a, 3a) eine Tastatur / Touchscreen aufweist und ein Ausgabemedium für die schriftlichen Notizen.

13. Schutzgriff nach einem der vorstehenden Ansprüche, **dadurch gekennzeichnet, dass** die Griffbereichspasstücke (2a, 3a) ein integriertes akustisches Ausgabemedium und ein Funkmittel aufweist, welches über Bluetooth oder WLAN über ein Funknetzwerk mit einem Geschäft in dem man gerade einkauft verbindet, wobei über das Ausgabemedium über das Funknetzwerk empfangene Audiobotschaften dem Benutzer des Schutzgriffs abspielbar sind.

14. Schutzgriff nach einem der vorstehenden Ansprüche, **dadurch gekennzeichnet, dass** das Griffbereichspassstück (2a, 3a) eine Leuchtfläche mit einem elektrisch betriebenen Leuchtmittel aufweist.

15. Schutzgriff nach einem der vorstehenden Ansprüche, **dadurch gekennzeichnet, dass** das Griffbereichspassstücke (2a, 3a) einen wiederbefüllbaren Hohlraum aufweist, wobei der Hohlraum mit einer Flüssigkeit wie z.B. einem Desinfektionsmittel befüllbar ist, wobei durch Zusammendrücken des Griffbereiches die Flüssigkeit Hohlraum über eine öffnen- und schließbare Spenderöffnung abgegeben werden kann.

16. Schutzgriff nach einem der vorherstehenden Ansprüche, **dadurch gekennzeichnet, dass** das Griffbereichspassstück (2a, 3a) eine eigene, verschließbare Aufbewahrungsfläche bereitstellt, z. B. um einen losen Autoschlüssel oder Einkaufszettel aufzubewahren.

17. Schutzgriff nach einem der vorstehenden Ansprüche, **dadurch gekennzeichnet, dass** das Griffbereichspassstück (2a, 3a) einen handschuhähnlichen Aufsatz aufweist.

18. Schutzgriff nach einem der vorstehenden Ansprüche, **dadurch gekennzeichnet, dass** die Griffbereichspasstücke (2a, 3a) ein Alarmgerät aufweisen, welches durch Drücken einer Taste oder durch Herausziehen einer Schnur ausgelöst wird und ein akustisches Signal ausgibt.

19. Schutzgriff nach einem der vorstehenden Ansprüche, **dadurch gekennzeichnet, dass** das Griffbereichspassstück (2a, 3a) einen flachen Taschenrechner aufweist.

20. Schutzgriff nach einem der vorherstehenden Ansprüche, **dadurch gekennzeichnet, dass** das Griffbereichspassstück (2a, 3a) eine Uhr aufweist.

21. Schutzgriff nach einem der vorherstehenden Ansprüche, **dadurch gekennzeichnet, dass** das Griffbereichspassstück (2a, 3a) ein wiederbefüllbares Feuerzeug aufweist.

22. Schutzgriff nach einem der vorstehenden Ansprüche, **dadurch gekennzeichnet, dass** das Griffbereichspassstück (2a, 3a) einen Akkumulator aufweist.

23. Schutzgriff nach dem vorstehenden Anspruch, **dadurch gekennzeichnet, dass** der Akkumulator im Griffbereichspassstück (2a, 3a) über einen USB-Anschluss ladbar ist und/oder dass das Griffbereichspassstück (2a, 3a) Solarzellen aufweist, wobei der Akkumulator mittels der Solarzellen aufladbar ist.

24. Schutzgriff nach einem der vorstehenden Ansprüche, **dadurch gekennzeichnet, dass** das Griffbereichspassstück (2a, 3a) ein Batteriefach aufweist.

25. Schutzgriff nach einem der vorstehenden Ansprüche, **dadurch gekennzeichnet, dass** die schwenkbewegliche Verbindung am ersten Längskantenbereich ein oder mehrere schwenkbewegliche Verbindungen in Form von Scharnieren, Gelenken, Federn und/ oder Kunststofflippen aufweist.

26. Schutzgriff nach einem der vorstehenden Ansprüche, **dadurch gekennzeichnet, dass** die Griffrahmen (2b, 3b) in ihrem Innenbereich einen Verbindungsbereich aufweisen, welcher mit passenden Innenbereichspassstücken, welche kompatible Verbindungsbereiche in ihrem Außenbereich und ein Loch für den Transport aufweisen, kombinierbar sind.

27. Schutzgriff nach dem vorstehenden Anspruch, **dadurch gekennzeichnet, dass** die Innenbereichspasstücke einen Schaumstoff in ihrem Innenbereich aufweisen, welcher halbzylindrisch oder U-förmig sein kann, so dass man, wenn man zwei dieser Innenbereichspassstücke benutzt, eine engere zylindrische oder eine eckige Aufnahme schafft.

28. Schutzgriff nach dem vorstehenden Anspruch 26 oder 27 , **dadurch gekennzeichnet, dass** die Innenbereichspasstücke auf einer Seite eine geschlossene Endfläche aufweisen, welche einen Seitenbereich des Schutzgriffes verschließt, wenn man zwei dieser Passstücke verwendet und den Schutzgriff dazu schließt, so dass der Schutzgriff wie eine Hülle z B. auf Schubkarrengriffe//Sackkarrengriffe übergestülpt werden kann und somit die Schubkarre / Sackkarre kontaktlos angehoben und geschoben werden kann.

29. Schutzgriff nach dem vorstehenden Anspruch 26 bis 28, **dadurch gekennzeichnet, dass** die Innenbereichspasstücke eine Kupplungsvorrichtung aufweisen, welche es ermöglicht, zwei Schutzgriffe zu einem längeren Doppelschutzgriff zu verbinden, um einen anderen Griffbereich zu schaffen, wobei das Kupplungsstück eine eigene schwenkbewegliche Verbindung und einen passenden offenen Längskantenbereich aufweist.

30. Schutzgriff nach dem vorstehenden Anspruch 26 bis 29, **dadurch gekennzeichnet, dass** die Innenbereichspasstücke einen Schnittbereich aufweisen, so dass der Schutzgriff wie eine Knipse verwendet werden kann, um zum Beispiel stachlige oder stark saftende Pflanzen zu ernten wie z. B. Brennnesseln, Sanddorn, Hagebutten oder Löwenzahn.
